# EUROPEAN PATENT APPLICATION

(11) **EP 3 107 247 A1**
(43) Date of publication of application: **21.12.2016**
(21) Application number: 14885052.2
(22) Date of filing: 04.12.2014
(51) Int. Cl.: H04L 12/58

(54) **DISPLAY STYLE ADJUSTMENT METHOD, DEVICE, AND SYSTEM**

(30) Priority: 06.03.2014 CN 201410080702
(71) Applicant: Huawei Technologies Co., Ltd., Longgang District Shenzhen, Guangdong 518129 (CN)
(72) Inventor: WANG, Junxiu, Shenzhen Guangdong 518129 (CN); FANG, Qiang, Shenzhen Guangdong 518129 (CN)
(74) Representative: Epping - Hermann - Fischer
(86) International application number: PCT/CN2014/093001
(87) International publication number: WO 2015/131593

(57) **Abstract**

Embodiments of the present invention provide a display style adjustment method and system, and a device. The display style adjustment system in the present invention is applicable to instant messaging and includes: an obtaining module, configured to obtain a relationship between at least two terminals in an instant messaging group; a determining module, configured to determine, based on the relationship between the at least two terminals obtained by the obtaining module, to recommend a target display style to some or all terminals of the at least two terminals; and a selection module, configured to select the target display style according to an indication of the determining module and a preset rule of the system, so that an instant message is displayed in the target display style on the some or all terminals. In the embodiments of the present invention, a display style used by a terminal that has a display conflict during an instant messaging process is adjusted to improve a recognition of different participating users in a multi-party instant messaging process, and to accurately and quickly distinguish multiple users participating in the messaging.

## Description

This application claims priority to Chinese Patent Application No. 201410080702.5, filed with the Chinese Patent Office on March 06, 2014 and entitled " METHOD, SYSTEM, AND DEVICE FOR DISPLAY STYLE ADJUSTMENT ", which is incorporated herein by reference in its entirety.

### TECHNICAL FIELD

Embodiments of the present invention relate to communications technologies, and in particular, to a method, system, and a device for display style adjustment.

### BACKGROUND

With development of communications technologies, instant messaging (Instant Messaging, IM for short) services, such as WeChat, QQ, and Microsoft Service Network (Microsoft Service Network, MSN for short) present a diversification trend.

In the instant messaging services, a user may use a display style provided in an instant messaging system to perform one-to-one communication or join in a group for discussion. However, a display conflict may exist between multiple users due to the display style provided by the instance communication system, and a speaker is not easily recognized.

### SUMMARY

Embodiments of the present invention provide a display style adjustment method and system, and a device to resolve a problem that a speaker is not easily recognized in an instant messaging service, and to accurately and quickly distinguish multiple users participating in messaging.

The present invention provides a display style adjustment system, where the system is applicable to instant messaging and includes:
an obtaining module, configured to obtain a relationship between at least two terminals in an instant messaging group;
a determining module, configured to determine, based on the relationship between the at least two terminals obtained by the obtaining module, to recommend a target display style to some or all terminals of the at least two terminals; and
a selection module, configured to select the target display style according to an indication of the determining module and a preset rule of the system, so that an instant message is displayed in the target display style on the some or all terminals.

In a first possible implementation manner of the first aspect, the relationship between the at least two terminals includes:
a relationship between instant message display styles of the at least two terminals, or a relationship between users of the at least two terminals.

According to the first possible implementation manner of the first aspect, in a second possible implementation manner of the first aspect, the relationship between the instant message display styles of the at least two terminals is specifically that a similarity between the display styles reaches a preset criterion.

According to the first possible implementation manner of the first aspect, in a third possible implementation manner of the first aspect, the relationship between the users of the at least two terminals is that the users of the at least two terminals belong to a same subgroup of the instant messaging group.

According to the second possible implementation manner of the first aspect, in a fourth possible implementation manner of the first aspect, the system is integrated into any terminal that performs instant messaging, where
the obtaining module is specifically configured to receive an instant message from at least one another terminal in the instant messaging group, and obtain, through parsing, an instant message display style of the at least one another terminal;
the determining module is specifically configured to compare the instant message display style of the at least one another terminal with a default display style pre-stored locally in the terminal, and if a difference between the two reaches to the preset criterion, determine to provide the recommended target display style for the terminal and send the indication to the selection module; and
the selection module is configured to select the target display style according to the indication sent by the determining module and the preset rule, so that the instant message is displayed in the target display style on the terminal.

According to the second possible implementation manner of the first aspect, in a fifth possible implementation manner of the first aspect, the obtaining module and the determining module are integrated into a server that performs instant messaging, and the selection module is integrated into any terminal that performs instant messaging, where
the obtaining module is specifically configured to receive instant messages from the at least two terminals in the instant messaging group, and separately obtain, through parsing, the instant message display styles of the at least two terminals;
the determining module is specifically configured to compare any two display styles obtained by the obtaining module through parsing, and if a difference between the any two display styles reaches to the preset criterion, determine to provide the recommended target display style for at least one of the at least two terminals, and send the indication to the selection module; and
the selection module is specifically configured to select the target display style according to the indication sent by the determining module and based on the preset rule, so that the instant message is displayed in the target display style on the terminal.

According to the second possible implementation manner of the first aspect, in a sixth possible implementation manner of the first aspect, the system is integrated into a server that performs instant messaging, where
the obtaining module is specifically configured to receive instant messages from the at least two terminals in the instant messaging group, and separately obtain, through parsing, the instant message display styles of the at least two terminals;
the determining module is specifically configured to compare any two display styles obtained by the obtaining module through parsing, and if a difference between the any two display styles reaches to the preset criterion, determine to provide the recommended target display style for at least one of terminals corresponding to the any two display styles, and send the indication to the selection module; and
the selection module is specifically configured to select the target display style for the at least one terminal according to the indication sent by the determining module and based on the preset rule, so that the instant message is displayed in the target display style on the at least one terminal.

According to the third possible implementation manner of the first aspect, in a seventh possible implementation manner of the first aspect, the system is integrated into any terminal that performs instant messaging, where
the obtaining module is specifically configured to receive an instant message from at least one another terminal in the instant messaging group, and obtain, through parsing, user information of the at least one another terminal;
the determining module is specifically configured to determine, according to the user information of the at least one another terminal obtained by the obtaining module, user information of the terminal itself, and instant messaging subgroup information, that users of the terminal and the at least one another terminal belong to a same subgroup of the instant messaging group, and then determine to provide the recommended target display style for the terminal, and send the indication to the selection module; and
the selection module is configured to select the target display style according to the indication sent by the determining module and the preset rule, so that the instant message is displayed in the target display style on the terminal.

According to the third possible implementation manner of the first aspect, in an eighth possible implementation manner of the first aspect, the obtaining module and the determining module are integrated into a server that performs instant messaging, and the selection module is integrated into any terminal that performs instant messaging, where
the obtaining module is specifically configured to receive instant messages from the at least two terminals in the instant messaging group, and separately obtain, through parsing, user information of the at least two terminals;
the determining module is specifically configured to determine, according to the user information of the at least two terminals obtained by the obtaining module and instant messaging subgroup information, that the users of the at least two terminals belong to a same subgroup of the instant messaging group, and then determine to provide the recommended target display style for at least one terminal of the at least two terminals, and send the indication to the selection module; and
the selection module is specifically configured to select the target display style according to the indication sent by the determining module and based on the preset rule, so that the instant message is displayed in the recommended display style on the terminal.

According to the third possible implementation manner of the first aspect, in a ninth possible implementation manner of the first aspect, the system is integrated into a server that performs instant messaging, where
the obtaining module is specifically configured to receive instant messages from the at least two terminals in the instant messaging group, and separately obtain, through parsing, user information of the at least two terminals;
the determining module is specifically configured to determine, according to the user information of the at least two terminals and instant messaging subgroup information, that the users of the at least two terminals belong to a same subgroup of the instant messaging group, and then determine to provide the recommended target display style for at least one terminal of the at least two terminals, and send an indication to the selection module; and
the selection module is specifically configured to select the target display style according to the indication sent by the determining module and based on the preset rule, so that the instant message is displayed in the target display style on the at least one terminal.

According to a second aspect, the present invention provides a terminal, where the terminal is applicable to instant messaging and includes:
the display style adjustment system according to the first aspect, or the first or second or fourth or fifth or seventh or eighth possible implementation manner of the first aspect; and
a display module, configured to display, on a user interface of the terminal according to the target display style selected by the selection module in the display style adjustment system, instant information sent by the terminal.

According to a third aspect, the present invention provides a server, where the server is applicable to instant messaging and includes:
the display style adjustment system according to the first aspect, or the first or third or sixth or ninth possible implementation manner of the first aspect;
an encapsulation module, configured to encapsulate, according to the target display style selected by the selection module, an instant message to be sent to the at least one terminal; and
a sending module, configured to send the encapsulated instant message.

According to a fourth aspect, the present invention provides a display style adjustment method, where the method is applicable to instant messaging and includes:
obtaining a relationship between at least two terminals in an instant messaging group;
determining, based on the relationship between the at least two terminals, to recommend a target display style to some or all terminals of the at least two terminals; and
selecting the target display style according to a preset rule, so that an instant message is displayed in the target display style on the some or all terminals.

In a first possible implementation manner of the fourth aspect, the relationship between the at least two terminals includes:
a relationship between instant message display styles of the at least two terminals, or a relationship between users of the at least two terminals.

According to the first possible implementation manner of the fourth aspect, in a second possible implementation manner of the fourth aspect, the relationship between the instant message display styles of the at least two terminals is specifically that a similarity between the display styles reaches a preset criterion.

According to the first possible implementation manner of the fourth aspect, in a third possible implementation manner of the fourth aspect, the relationship between the users of the at least two terminals is specifically that the users of the at least two terminals belong to a same subgroup of the instant messaging group.

According to the second possible implementation manner of the fourth aspect, in a fourth possible implementation manner of the fourth aspect, the method is executed by a terminal that performs instant messaging, where
the obtaining a relationship between at least two terminals in an instant messaging group includes:
receiving, by the terminal, an instant message from at least one another terminal in the instant messaging group, and obtaining, through parsing, an instant message display style of the at least one another terminal;
the determining, based on the relationship between the at least two terminals, to recommend a target display style to some or all terminals of the at least two terminals includes:
   comparing, by the terminal, the instant message display style of the at least one another terminal with a default display style pre-stored locally in the terminal, and if a difference between the two reaches to the preset criterion, determining to provide the recommended target display style; and
   the selecting the target display style according to a preset rule, so that an instant message is displayed in the target display style on the some or all terminals includes:
      selecting, by the terminal, the target display style according to the preset rule, so that the instant message is displayed in the target display style on a display interface of the terminal.

According to the second possible implementation manner of the fourth aspect, in a fifth possible implementation manner of the fourth aspect, the method is executed by any terminal that performs instant messaging and a server that performs instant messaging, where
the obtaining a relationship between at least two terminals in an instant messaging group includes:
receiving, by the server, instant messages from the at least two terminals in the instant messaging group, and separately obtaining, through parsing, the instant message display styles of the at least two terminals;
the determining, based on the relationship between the at least two terminals, to recommend a target display style to some or all terminals of the at least two terminals includes:
comparing, by the server, any two display styles of the foregoing display styles obtained through parsing, and if a difference between the any two display styles reaches to the preset criterion, determining to provide the recommended target display style for at least one of the at least two terminals, and sending an indication to the terminal; and
the selecting the target display style according to a preset rule, so that an instant message is displayed in the target display style on the some or all terminals includes:
   selecting, by the terminal that receives the indication, the target display style based on the preset rule, so that the instant message is displayed in the target display style on a display interface of the terminal.

According to the second possible implementation manner of the fourth aspect, in a sixth possible implementation manner of the fourth aspect, the method is executed by a server that performs instant messaging, where
the obtaining a relationship between at least two terminals in an instant messaging group includes:
receiving, by the server, instant messages from the at least two terminals in the instant messaging group, and separately obtaining, through parsing, the instant message display styles of the at least two terminals;
the determining, based on the relationship between the at least two terminals, to recommend a target display style to some or all terminals of the at least two terminals includes:
   comparing, by the server, any two display styles of the foregoing display styles obtained through parsing, and if a difference between the any two display styles reaches to the preset criterion, determining to provide the recommended target display style for at least one of terminals corresponding to the any two display styles, and sending an indication to the terminal; and
   the selecting the target display style according to a preset rule, so that an instant message is displayed in the target display style on the some or all terminals includes:
      selecting, by the server, the target display style for the terminal based on the preset
      rule, so that the instant message is displayed in the target display style on the terminal.

According to the third possible implementation manner of the fourth aspect, in a seventh possible implementation manner of the fourth aspect, the method is executed by a terminal that performs instant messaging, where
the obtaining a relationship between at least two terminals in an instant messaging group includes:
receiving, by the terminal, an instant message from at least one another terminal in the instant messaging group, and obtaining, through parsing, user information of the at least one another terminal;
the determining, based on the relationship between the at least two terminals, to recommend a target display style to some or all terminals of the at least two terminals includes:
   determining, by the terminal according to user information of the terminal itself, the user information of the at least one another terminal, and instant messaging subgroup information, that users of the terminal itself and the at least one another terminal belong to a same subgroup of the instant messaging group, and then determining to provide the recommended target display style for at least one terminal of the terminal itself and the at least one another terminal, and sending an indication to the terminal; and
   the selecting the target display style according to a preset rule, so that an instant message is displayed in the target display style on the some or all terminals includes:
      selecting, by the terminal that receives the indication, the target display style according to the preset rule, so that the instant message is displayed in the target display style on a display interface of the terminal.

According to the third possible implementation manner of the fourth aspect, in an eighth possible implementation manner of the fourth aspect, the method is executed by any terminal that performs instant messaging and a server that performs instant messaging, where
the obtaining a relationship between at least two terminals in an instant messaging group includes:
receiving, by the server, instant messages from the at least two terminals in the instant messaging group, and separately obtaining, through parsing, user information of the at least two terminals;
the determining, based on the relationship between the at least two terminals, to recommend a target display style to some or all terminals of the at least two terminals includes:
   determining, by the server, according to the user information of the at least two terminals and instant messaging subgroup information, that the users of the at least two terminals belong to a same subgroup of the instant messaging group, and then determining to provide the recommended target display style for at least one terminal of the at least two terminals, and sending an indication to the terminal; and
   the selecting the target display style according to a preset rule, so that an instant message is displayed in the target display style on the some or all terminals includes:
      selecting, by the terminal that receives the indication, the target display style based on the preset rule, so that the instant message is displayed in the recommended display style on a display interface of the terminal.

According to the third possible implementation manner of the fourth aspect, in a ninth possible implementation manner of the fourth aspect, the method is executed by a server that performs instant messaging, where
the obtaining a relationship between at least two terminals in an instant messaging group includes:
receiving, by the server, instant messages from the at least two terminals in the instant messaging group, and separately obtaining, through parsing, user information of the at least two terminals;
the determining, based on the relationship between the at least two terminals, to recommend a target display style to some or all terminals of the at least two terminals includes:
   determining, by the server, according to the user information of the at least two terminals and instant messaging subgroup information, that the users of the at least two terminals belong to a same subgroup of the instant messaging group, and then determining to provide the recommended target display style for at least one terminal of the at least two terminals, and sending an indication to the terminal; and
   the selecting the target display style according to a preset rule, so that an instant message is displayed in the target display style on the some or all terminals includes:
      selecting, by the server, the target display style based on the preset rule, so that the instant message is displayed in the target display style on the at least one terminal.

In the present invention, a display style used by a terminal that has a display conflict during an instant messaging process is adjusted to improve a recognition of different participating users in a multi-party instant messaging process, and to accurately and quickly distinguish multiple users participating in the messaging.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of an application scenario of a display style adjustment system according to Embodiment 1 of the present invention;
FIG. 2 is a schematic structural diagram of a display style adjustment system according to Embodiment 1 of the present invention;
FIG. 3 is a signaling flowchart of a display style adjustment system according to Embodiment 2 of the present invention;
FIG. 4 is an exemplary diagram of a target display style sequence fragment of Embodiment 2 of a display style adjustment system according to the present invention;
FIG. 5 is an exemplary diagram of a target display style of a display style adjustment system according to Embodiment 2 of the present invention;
FIG. 6 is a signaling flowchart of a display style adjustment system according to Embodiment 3 of the present invention;
FIG. 7 is a signaling flowchart of a display style adjustment system according to Embodiment 4 of the present invention;
FIG. 8 is a schematic structural diagram of a terminal according to Embodiment 1 of the present invention;
FIG. 9 is a schematic structural diagram of a server according to Embodiment 1 of the present invention; and
FIG. 10 is a flowchart of a display style adjustment method according to Embodiment 1 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

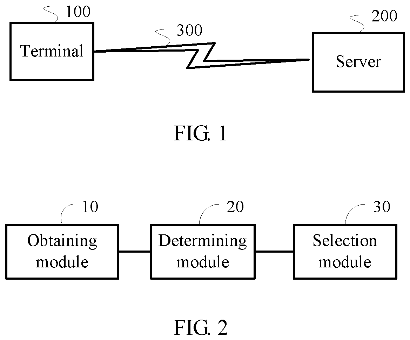

FIG. 1 is a schematic diagram of an application scenario of a display style adjustment system according to Embodiment 1 of the present invention. Specifically, a terminal may receive an instant messaging service provided by a server. As shown in FIG. 1, a terminal 100 and a server 200 communicate with each other by using a communications network 300 (wired or wireless). The communications network 300 includes but is not limited to a mobile communications network (Mobile Telephone Network), a wireless local area network (Wireless Local Area Network, WLAN for short), a Bluetooth network (Bluetooth Personal Area Network), the Ethernet (Ethernet LAN), a token ring local area network (Token Ring LAN), a wide area network (Wide Area Network), the Internet (the Internet), and the like.

The terminal 100 and the server 200 may implement a communication based on different transmission technologies. The transmission technologies include but are not limited to Code Division Multiple Access (Code Division Multiple Access, CDMA for short), Global System for Mobile Communications (Global System for Mobile Communications, GSM for short), Universal Mobile Telecommunications System (Universal Mobile Telecommunications System, UMTS for short), Time Division Multiple Access (Time Division Multiple Access, TDMA for short), Frequency Division Multiple Access (Frequency Division Multiple Access, FDMA for short), Transmission Control Protocol/Internet Protocol (Transmission Control Protocol/Internet Protocol, TCP/IP for short), short message service (Short Messaging Service, SMS for short), multimedia messaging service (Multimedia Messaging Service, MMS for short), electronic mail (Electronic Mail, e-mail for short), instant messaging service (Instant Messaging Service, IMS for short), Bluetooth (Bluetooth), IEEE 802.11, and the like.

The terminal 100 includes a user input/output port and an instant messaging client. Specifically, the user input/output port may be a display screen, a touchscreen, a keyboard, or the like. The display screen and the touchscreen may be overlapped or may be separated. The instant messaging client is configured to display a communication interface, receive an instant message via the user interface to exchange instant messages with the server 200. The instant messaging client may be installed on the terminal 100, for example, a mobile communications terminal or another handheld device, such as a PDA, various types of tablet computers, a palmtop computer, or a dedicated control terminal.

FIG. 2 is a schematic structural diagram of a display style adjustment system according to the Embodiment 1 of present invention. This embodiment of the present invention provides a display style adjustment system. The system may be integrated in an instant messaging client, or may exist independently as a plug-in, or may be integrated into a terminal or a server. The terminal may be a mobile device, a smartphone, an integrated messaging device (Integrated Messaging Device, IMD for short), a personal computer (Personal Computer, PC for short below), a notebook computer, a palmtop computer (Personal Digital Assistant, PDA for short), a tablet computer, or any terminal device. The terminal may be set in various traffic tools or set in a wearable device. The system may be implemented by means of software or hardware or a combination of software and hardware.

As shown in FIG. 2, the display style adjustment system in this embodiment of the present invention includes an obtaining module 10, a determining module 20, and a selection module 30. The obtaining module 10 is configured to obtain a relationship between at least two terminals in an instant messaging group. The determining module 20 is configured to determine to recommend a target display style to some or all terminals of the at least two terminals based on the relationship between the at least two terminals obtained by the obtaining module 10. The selection module 30 is configured to select the target display style to recommend according to an indication of the determining module 20 and a preset rule of the system, so that an instant message is displayed in the target display style recommended on the some or all terminals.

Specifically, the display style is various characteristics that reflect a display effect of instant messaging content, and may include a text style and/or a paragraph style. The text style may include one or any combination of a font (including Chinese fonts such as KaiTi, Fangsong, and LiShu, English fonts, or other language fonts such as Times New Roman), a font style (such as Regular, Bold, and Italic), a font size (that is, a word size, such as 14 pt and 10.5 pt), a text color, a text effect (such as shadow and underline), and character spacing.

In addition, the display style may further include a paragraph style. In an instant messaging process, the display style may be reflected when a user publishes a long piece of text content. It should be further noted that the display style includes but is not limited to display style types in this embodiment, and another display style that is helpful in recognizing an instant messaging participant may be included in the display style provided in this embodiment of the preset invention, which is described herein.

The instant messaging client presents, in two manners, a display style used by the instant messaging client.
Manner 1: In a to-be-input text box on the instant messaging client, a display style is directly displayed in the to-be-input text box in a form of an example, to facilitate user understanding or further change. In a common situation, a user does not change the display style. When the user enters text later, the example is deleted automatically, and the entered text is displayed in the foregoing display style.
Manner 2: A value of a default display style is displayed above a to-be-input text box. In this embodiment of the present invention, because display styles recommended when a user joins in a group for instant messaging are not necessarily the same, from the point of the user, the foregoing default display style may be adjusted from a value of a display style last time to a value of a display style this time when the user starts to enter text.

That the obtaining module 10 obtains a relationship between at least two terminals in an instant messaging group may be understood by persons skilled in the art as that if the foregoing display style adjustment system exists independently as a plug-in or is integrated into a server, the foregoing terminal is any terminal device configured to perform instant messaging. If the foregoing display style adjustment system is integrated into a terminal, the foregoing terminal is any other terminal device that is configured to perform instant messaging and that is different from the foregoing integrated terminal.

That the determining module 20 determines to recommend a target display style to some or all terminals of the at least two terminals based on the relationship between the at least two terminals obtained by the obtaining module 10 may be understood by persons skilled in the art as that if the foregoing display style adjustment system exists independently as a plug-in or is integrated into a server, the determining module 20 recommends the target display style to all users participating in instant messaging. If the foregoing display style adjustment system is integrated into a terminal, the determining module 20 recommends the target display style to an instant messaging client in the terminal to perform instant messaging.

It should be noted that in any embodiment of the present invention, the target display style is obviously distinguish from a display style used by any terminal of the foregoing terminals, so as to improve a recognition of an instant messaging speaker.

For example, an instant message sent in instant messaging may be encapsulated by using the following format, and is used to transmit a display style between instant messaging clients:
<font='SimSun' size=12 color=blue>hello</font>

After receiving the instant message, the instant messaging client displays text content "hello" according to a font "SimSun", a font size "12", and a color "blue". Therefore, the instant messaging client may obtain a display style of each participant by analyzing a received instant message, and cache or store the display style of each participant as a participant attribute. When there is a new participant joins in the group for discussion, a display style used by the new participant is obtained from a received instant message sent by the new participant, and the display style is compared with a pre-stored display style used by another participant to determine a display style similarity, where the display style similarity indicates a display style conflict.

In a specific implementation process, the foregoing display style similarity may be a preset criterion. For example, if a font size difference between display styles used by any two instant messaging clients is less than two points, and text colors and fonts in the display styles used by the two instant messaging clients are the same, it is determined that a similarity between the display styles used by the two instant messaging clients is high. For another example, if box shapes of text boxes and background colors in display styles used by any two instant messaging clients are the same, it is determined that a similarity between the display styles used by the two instant messaging clients is high.

That the selection module 30 selects the target display style according to an indication of the determining module 20 and a preset rule of the system, so that an instant message is displayed in the target display style on the some or all terminals may be understood by persons skilled in the art as that: if the foregoing display style adjustment system exists independently as a plug-in or is integrated into a server, the selection module 30 receives the indication of the determining module 20, and selects the target display style according to the preset rule of the system, so that instant message encapsulated using the target display style is displayed on a communication interface of the terminal device. If the foregoing display style adjustment system is integrated into a terminal, the selection module 30 receives the indication of the determining module 20, and selects the target display style according to the preset rule of the system, so that the instant message is displayed in the target display style on the display interface of the terminal.

In this embodiment of the present invention, a display style adjustment system adjusts a display style used by a terminal that has a display conflict during an instant messaging, which can improve a recognition of different participating users in a multi-party instant messaging process and accurately and quickly distinguish multiple users participating in messaging.

In the foregoing embodiment, the relationship between the at least two terminals may include a relationship between instant message display styles of the at least two terminals or a relationship between users of the at least two terminals. Optionally, the relationship between the at least two terminals may include a relationship between instant message display styles of the at least two terminals or a relationship between users of the at least two terminals. The relationship between the instant message display styles of the at least two terminals may be specifically that a similarity between the display styles reaches a preset criterion. The relationship between the users of the at least two terminals may be specifically that the users of the at least two terminals belong to a same subgroup of an instant messaging group.

The following uses several specific embodiments to describe in detail a technical solution of a system embodiment shown in FIG. 2.

In an implementation manner, a display style adjustment system is integrated into any terminal that performs instant messaging. An obtaining module 10 is specifically configured to receive an instant message from at least one another terminal in an instant messaging group, and obtain, through parsing, an instant message display style of the at least one another terminal. A determining module 20 is specifically configured to compare the instant message display style of the at least one another terminal with a default display style pre-stored locally in the terminal, and if a difference between the two reaches to a preset criterion, determine to provide a recommended target display style for the terminal and send an indication to a selection module 30. The selection module 30 may be configured to select the target display style according to the indication sent by the determining module 20 and a preset rule, so that the instant message is displayed in the target display style on the terminal.

The obtaining module 20 may be specifically configured to parse a text format of the foregoing instant message and a pre-stored text format, and if determining that the text format of the foregoing instant message matches the pre-stored text format, determine that a display style used by the terminal in which the obtaining module 20 is located conflicts with a display style used by the terminal that sends the foregoing instant message and determine to provide the recommended target display style for the terminal in which the obtaining module 20 is located, and send an indication to the selection module 30. The selection module 30 may be configured to select the target display style according to the indication sent by the determining module 20 and the preset rule, so that the instant message is displayed in the target display style on the terminal.

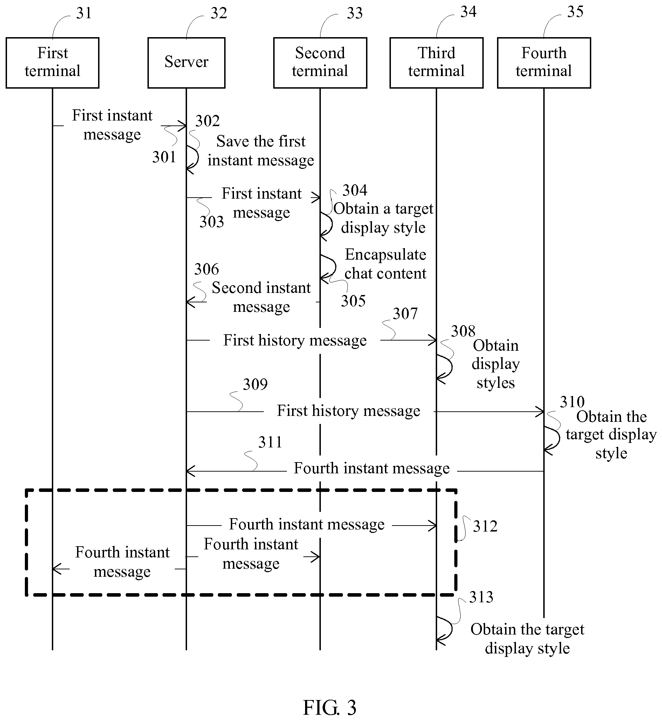

FIG. 3 is a signaling flowchart of a display style adjustment system according to the Embodiment 2 of present invention. As shown in FIG. 3, this embodiment of the present invention describes in detail, by using interaction between different terminals and a server in a multi-party chat application scenario, the technical solution of the system embodiment shown in FIG. 2. The display style adjustment system is integrated into a first terminal 31, a second terminal 33, a third terminal 34, and a fourth terminal 35.

301: The first terminal 31 sends a first instant message to a server 32.

The first terminal 31 initiates a multi-party chat and transmits the first instant message to the server 32. Because the first terminal 31 is the terminal that firstly sends a multi-party chat message, a display style used by the first terminal 31 may be a default text format or a text format customized by a user of the first terminal 31. The first terminal 31 encapsulates, by using a display style used by the first terminal 31, chat content entered by the user. For example, chat content "hello" is encapsulated in a text format "<font='SimSun' size=12 color=blue>hello</font>" and is used as a message body of the first instant message. Then, the first terminal 31 sends the encapsulated first instant message to the server 32.

302: The server 32 saves the first instant message.

Specifically, the server 32 saves the received first instant message and sends the first instant message to the second terminal 33. A storage time length of a received group message (such as the first instant message) in the server 32 is set by the server 32 itself, which is not limited in this embodiment of the present invention.

303: The second terminal 33 receives the first instant message.

304: The second terminal 33 obtains a message body, and obtains, through parsing, an instant message display style of the first terminal.

Specifically, after receiving the first instant message, the second terminal 33 receives the foregoing message body <font='SimSun' size=12 color=blue>hello</font>, and parses out the text format: font: SimSun, size: 12, and color: blue. The second terminal 33 reads a default text format pre-stored locally. It is assumed that the default text format pre-stored locally in the second terminal 33 in this embodiment is: font: SimSun, size: 12, and color: blue. After comparing the two text formats, the second terminal 33 determines that a relationship between the default text format pre-stored in the second terminal 33 and the text format of the first terminal reaches a preset criterion, for example, a display style similarity is quite high (for example, the display styles are exactly the same or only the font sizes have a difference of two points). Therefore, the second terminal 33 performs display style adjustment.

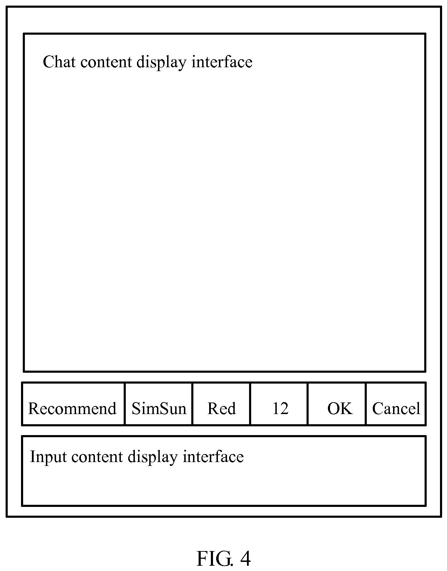

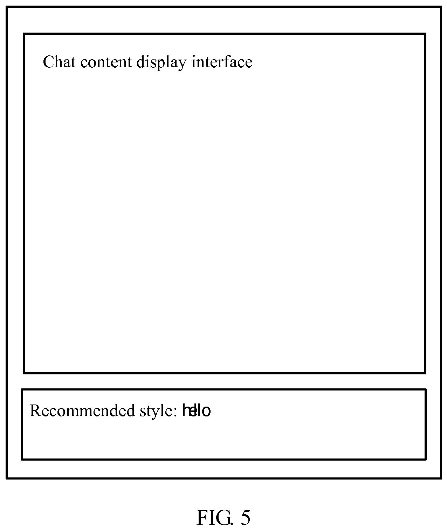

The second terminal 33 may select to adjust one or any combination of a color, a font size, or a font, and may perform selection according to a preset condition. The preset condition may be, for example, colors are different, fonts are different, or font sizes have a difference of more than two points. For example, if the second terminal 33 chooses to adjust a color to red, a prompt for recommending a display style pops up on an instant messaging interface of the second terminal 33, to display the target display style: font: SimSun, size: 12, color: red. As shown in FIG. 4 and FIG. 5, FIG. 4 is an exemplary diagram of a target display style selection box of a display style adjustment system according to Embodiment 2 of the present invention, and a user may further change a target display style according to a personal need; FIG. 5 is an exemplary diagram of the target display style of the display style adjustment system according to Embodiment 2 of the present invention, which visualizes the target display style, where the target display style used is: STXingkai, 12, black.

If the target display style selection box shown in FIG. 4 is used, the user may click OK or Cancel, or change the display style, or makes no selection. After the user makes a selection, the second terminal 33 records a final target display style, and saves the target display style as a display style customized by the user of the second terminal. The target display style may be saved in user information as an attribute of the user. When the user enters chat content later, the chat content is encapsulated by using the saved user-defined display style. If the user does not make a selection and directly enters chat content, it may be considered that the user accepts the target display style by default, the target display style is saved, and the chat content is encapsulated by using the saved user-defined display style; or it may be considered that the user rejects the recommended target display style and an original display style is continued to be used to encapsulate the chat content. Specifically, whether the target display style or the original display style is used is selected by a solution executor according to a situation, which is not limited in this embodiment of the present invention. Then, the second terminal 33 saves the display style of the first terminal 31 as a user attribute of the first terminal 31. At this point, the second terminal 33 completes display style adjustment.

305: The second terminal 33 encapsulates chat content by using a saved user-defined display style.

For example, the second terminal 33 encapsulates chat content "hello" by using a saved user-defined display style to encapsulate the chat content in a text format "<font='SimSun' size=12 color=blue>hello</font>".

306: The server 32 receives a second instant message (encapsulated chat content) sent by the second terminal 33.

301 to 306 are a process for differentiating display styles between the first terminal 31 and the second terminal 33. It is known that initial display styles of the first terminal 31 and the second terminal 33 conflict. After the display style adjustment is performed, a recognition of display styles of the first terminal 31 and the second terminal 33 is improved, and users participating in group discussion can quickly and accurately recognize instant messages sent by the first terminal 31 and the second terminal 33.

The following describes, by using 307 and 308, signaling exchanges between a new user, that is the third terminal 34, and the first terminal 31, the second terminal 33 and the server 32 after the new user joins in the group discussion. Here, it is assumed that the third terminal 34 does not send a third instant message, that is, the third terminal 34 does not send chat content.

307: The server 32 sends first history messages (that is, the foregoing first instant message and second instant message) stored in the server 32 to the third terminal 34.

308: The third terminal 34 obtains display styles of the first terminal 31 and the second terminal 33 from the first history messages.

The third terminal 34 uses the manner in 304 to perform comparison and determine and save a target display style. It is assumed that the display style determined by the third terminal 34 is: font: SimSun, size: 12, color: green.

Then, another new user, that is, the fourth terminal 35, joins in the group discussion. The following describes, by using 308 to 312, signaling exchanges between the fourth terminal 35 and the first terminal 31, the second terminal 33, the third terminal 34, and the server 32 after the fourth terminal 35 joins in the group discussion. Here, it is assumed that the fourth terminal 35 sends a fourth instant message, that is, the fourth terminal 35 sends chat content.

309: The server 32 sends the saved first history messages to the fourth terminal 35.

310: The fourth terminal 35 obtains the display styles of the first terminal 31 and the second terminal 33 from the first history messages and determines a target display style of the fourth terminal 35.

310 is the same as 308. The fourth terminal 35 uses the manner in 304 to perform comparison and determine and save a display style. It is assumed that the target display style determined by the fourth terminal 35 is: font: SimSun, size: 12, color: green. Optionally, the fourth terminal 35 saves the display styles of the first terminal 31 and the second terminal 33.

311: The fourth terminal 35 uses the saved target display style to send a fourth instant message to the server 32.

For example, chat content is "hello". The fourth terminal 35 encapsulates the chat content in "<font='SimSun' size=12 color=Green>hello</font>".

312: The server 32 saves the fourth instant message sent by the fourth terminal 35, and sends the fourth instant message to all participating terminals (the first terminal 31, the second terminal 33, and the third terminal 34).

313: After receiving the fourth instant message, the third terminal 34 obtains a message body and obtains, through parsing, the target display style.

Comparison is also performed according to the manner in 304. After comparison, the third terminal 34 determines that the target display style pre-stored in the third terminal 34 is the same as the display style of the fourth terminal 35. Therefore, the third terminal 34 determines another display style as a target display style of the third terminal 34.

In this embodiment of the present invention, recommendation of different display styles during a multi-user chat can be implemented according to 301 to 313, so that chat messages of terminal users are displayed uniquely, thereby improving a recognition.

In another implementation manner, the display style adjustment system is integrated into any terminal that performs instant messaging. The obtaining module 10 is specifically configured to receive an instant message from at least one another terminal in an instant messaging group, and obtain, through parsing, user information of the at least one another terminal. The determining module 20 is specifically configured to determine, according to the user information of the at least one another terminal obtained by the obtaining module 10, user information of the terminal, and instant messaging subgroup information, that a user of the terminal in which the determining module 20 is located and a user of the at least one another terminal belong to a same subgroup of the instant messaging group, and then determine to provide a recommended target display style for the terminal and send an indication to the selection module 30. The selection module 30 may be configured to select the target display style according to the indication sent by the determining module 20 and a preset rule, so that the instant message is displayed in the target display style on the terminal.

The determining module 20 may be specifically configured to: if determining, according to the instant message obtained by the first obtaining module 10, that the terminal in which the determining module 20 is located and at least one terminal of the at least one another terminal belong to a same subgroup, determine to provide the recommended target display style for the terminal in which the determining module 20 is located.

A difference between this embodiment of the present invention and the previous embodiment lies in that this embodiment of the present invention is used to improve a recognition of a group in multi-party instant messaging. Specifically, in multi-party instant messaging, a user may belong to a specific subgroup. In this implementation manner, a same or a matched display style can be recommended for the user in this subgroup. For example, with respect to a subgroup including lovers, couples, or friends, a lover-specific, couple-specific, or friend-specific display style is recommended for the subgroup.

If determining that there are two or more than two users of multiple users currently participating in instant messaging belong to a same subgroup, the determining module 20 may consider that display styles used by the two or more than two users conflict, and then determine respective target display styles of the two or more than two users according to a characteristic of the subgroup.

In this embodiment, target display styles determined for all users in a subgroup are similar or match with each other, which can enhance chat content display correlation among some correlated users in a multi-party instant messaging process. The "match with each other" means that the target display styles are not exactly the same visually, but have a similarity in some characteristics. For example, font colors are of a same color system (for example, one is deep red and one is light pink), and other text characteristics (fonts, font sizes, and the like) are all the same. For another example, a font style of a target display style is Bold, a font style of another target display style is Regular, and other text features are the same. For another example, text box shapes are the same but colors are different.

The selection module 30 receives the indication sent by the determining module 20, selects the target display style according to the preset rule, so that content to be entered later by each user in the user subgroup is encapsulated on the terminal by using the target display style.

This embodiment is an implementation scenario in which a similar display style is recommended. For interaction between different terminals and the server, reference may be made to FIG. 3. Before determining the target display style in 304, the second terminal 33 additionally determines a relationship between the user of the first terminal 31 and the user of the second terminal 33. According to user attributes of the first terminal 31 and the second terminal 33, it may be determined whether the users of the first terminal 31 and the second terminal 33 belong to a same subgroup, for example, a lover, couple, or friend relationship. If the users of the first terminal 31 and the second terminal 33 belong to a same subgroup, the determining module 20 in the display style adjustment system that cooperates with the second terminal 33 determines to recommend a target display style matching the subgroup.

On a basis of the foregoing embodiment, the selection module 30 may be further configured to display information about an alternative target display style on a communication interface for users to select. In this case, the determining module 20 may be further configured to save a display style selected by the user, as shown in FIG. 4.

It should be further noted that, in any embodiment of the preset invention, a chat interface may not be in a plain text manner but uses a text box or another manner, for example, an arc bubble used in WeChat. In each implementation manner of this embodiment of the present invention, the bubble manner may be used as one type of display style, and bubbles in different colors, shapes, or effects may be recommended to terminal users, for example, with bubbles, without bubbles, an arc bubble, a right angle bubble, a blue bubble, or a yellow bubble.

In addition, text content may be divided into paragraphs when there is relatively much text content, and a paragraph style, for example, indentation for the first line and spacing, may be recommended as a display style.

For a display style, multiple styles with a specific artistic characteristic may be further preset in each implementation manner, so that more personalized or flexible recommendation can be performed, or a characteristic display style can be recommended by further matching a user characteristic. The optional solution may be applied to instant messaging in a gaming scenario. For example, for a situation of individual recommendation, a wild style group, a romantic style group, and an unrestrained style group are preset, and a target display style in a matched group is recommended according to another attribute (such as a preference and gender) of a user during recommendation. For a situation of subgroup recommendation, multiple groups of display styles are preset. For example, for a couple relationship, a newlywed group, an old married couple group, a happily married couple group, and a dear enemy group may be set, so that recommendation is performed according to a subgroup characteristic.

In the foregoing embodiment, display style adjustment is performed on a terminal side. Optionally, display style adjustment may be performed on a server side. In the following, display style adjustment is implemented on a server side.

In still another implementation manner, the obtaining module 10 and the determining module 20 are integrated into a server that performs instant messaging, and the selection module 30 is integrated into any terminal that performs instant messaging. The obtaining module 10 may be specifically configured to receive instant messages from at least two terminals in an instant messaging group, and separately obtain, through parsing, instant message display styles of the at least two terminals. The determining module 20 may be specifically configured to compare any two display styles of the display styles obtained by the obtaining module 10 through parsing, and if a difference between the any two display styles reaches to a preset criterion, determine to provide a recommended target display style for at least one of the at least two terminals, and send an indication to the selection module 30. The selection module 30 may be specifically configured to select the target display style according to the indication sent by the determining module 20 and based on a preset rule, so that the instant message is displayed in the target display style on the terminal in which the selection module 30 is located.

The determining module 20 may be specifically configured to send a system message to any terminal of the foregoing at least two terminals, where the system message carries target display style information, so that the terminal implements display style adjustment according to the system message and saves an adjusted display style.

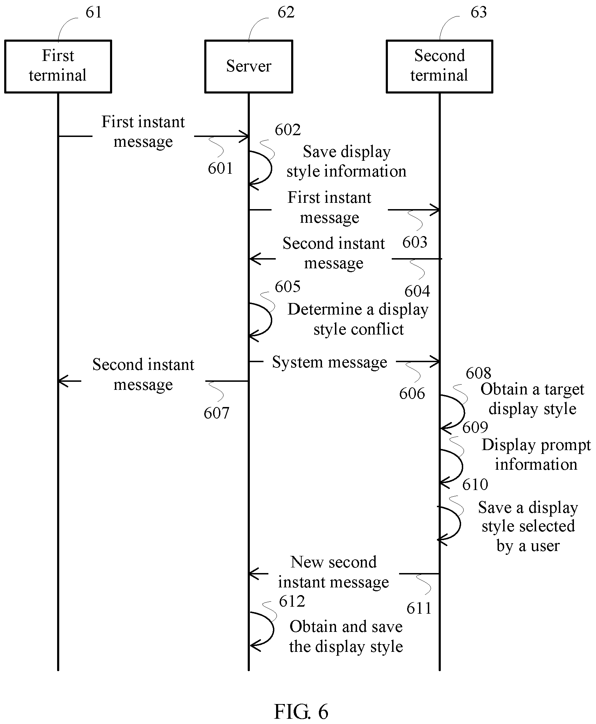

FIG. 6 is a signaling flowchart of a display style adjustment system according to the Embodiment 3 of present invention. As shown in FIG. 6, this embodiment of the present invention describes in detail, by using interaction between different terminals and a server in a multi-party chat application scenario, the technical solution of the system embodiment shown in FIG. 2.

601: A first terminal 61 sends a first instant message to a server 62.

Specifically, the first terminal 61 sends the first instant message to the server 62 by using a display style stored in the first terminal 61.

602: The server 62 saves display style information corresponding to the first instant message.

Specifically, the server 62 obtains the display style of the first terminal 61 from the first instant message, and saves the display style as a user attribute of the first terminal 61.

603: The server 62 sends the first instant message to a second terminal 63.

604: The second terminal 63 sends a second instant message to the server 62.

Specifically, the second terminal 63 sends the second instant message by using a saved customized display style.

605: The server 62 determines a display style conflict according to the second instant message.

Specifically, the server 62 obtains the display style of the second terminal 63 from the received second instant message, compares the display style with the pre-stored display style of the first terminal 61. If determining that the display styles of the two conflict, the server 62 selects a different display style, for example, a different color, as a target display style, and uses the target display style to encapsulate a system message, where the system message carries target display style information, and may be a display style adjustment message or may be the second instant message. For example, the system message may be <ChangeStyle font='SimSun' size='12' color='Red'></ChangeStyle>.

606: The server 62 sends a system message to the second terminal 63.

607: The server 62 sends the second instant message to the first terminal 61.

Optionally, the server 62 may send the received second instant message to the first terminal 61, or may change the received second instant message by using the target display style, and then send the changed second instant message to the first terminal 61.

608: The second terminal 63 obtains a target display style from the system message.

609: The second terminal 63 displays prompt information on a user interface.

The prompt information is used to prompt a user that a new display style is recommended. Optionally, the user may make a selection here. The user may choose to accept, reject, or change the display style, as shown in FIG. 4. If the user does not make a selection, an original display style saved may be used to send a new second instant message, or the target display style may be used to send the new second instant message. When the target display style is used to send the new second instant message, 610 is performed. Using the target display style or the original display style is determined by the executor, which is not limited in the present invention.

610: The second terminal 63 saves a display style selected by a user.

609 and 610 are optional steps.

611: The second terminal 63 sends a new second instant message to the server 62.

612: The server 62 obtains the display style from the new second instant message and saves the display style as a user attribute of the second terminal 63.

The server 62 may process subsequent display style adjustment of another group member by using a manner the same as that in 604 to 612

In this embodiment of the present invention, a server implements recommendation of different display styles during a multi-user chat, so that chat messages of terminal users are displayed uniquely, thereby improving a recognition.

In this implementation manner, optionally, the obtaining module 10 may be specifically configured to receive instant messages from at least two terminals in an instant messaging group, and separately obtain, through parsing, user information of the at least two terminals; the determining module 20 may be specifically configured to determine, according to the user information of the at least two terminals obtained by the obtaining module 10 and instant messaging subgroup information, that users of the at least two terminals belong to a same subgroup of the instant messaging group, and then determine to provide a recommended target display style for at least one terminal of the at least two terminals, and send an indication to the selection module 30; and the selection module 30 may be specifically configured to select the target display style according to the indication sent by the determining module 20 and based on a preset rule, so that the instant message is displayed in the recommended display style on the terminal.

In another implementation manner, the display style adjustment system is integrated into a server that performs instant messaging. The obtaining module 10 may be specifically configured to receive instant messages from at least two terminals in an instant messaging group, and separately obtain, through parsing, instant message display styles of the at least two terminals. The determining module 20 may be specifically configured to compare any two display styles of the display styles obtained by the obtaining module 10 through parsing, and if a difference between the any two display styles reaches to a preset criterion, determine to provide a recommended target display style for at least one of terminals corresponding to the any two display styles and send an indication to the selection module 30. The selection module 30 may be specifically configured to select the target display style for at least one terminal according to the indication sent by the determining module 20 and based on a preset rule, so that the instant message is displayed in the target display style on the at least one terminal.

The determining module 20 may be further configured to save target display style information, and encapsulate, according to the target display style information, an instant message that is sent by any terminal of the at least two terminals and received by the determining module 20.

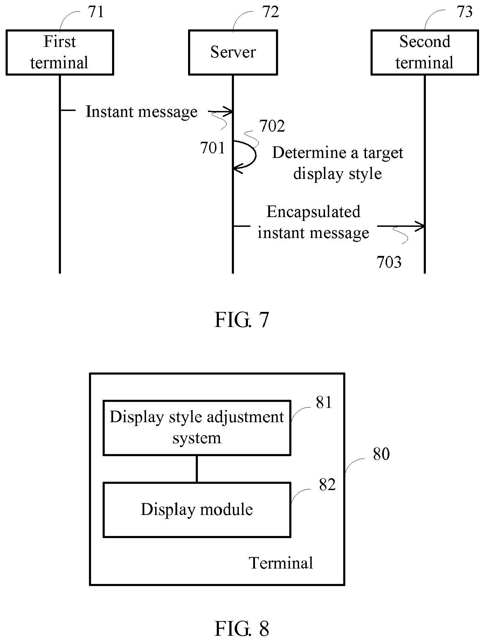

In this embodiment of the present invention, a terminal always uses one display style, for example, font: SimSun, size: 12, color: black. After receiving instant messages from terminals, a server allocates different target display styles to the terminals according to the instant messages, where the target display styles are saved as user attributes of the terminals. Then, the server re-encapsulates, by using the target display styles corresponding to the terminals, the instant messages that are sent by the terminals and received by the server, and sends the instant messages to corresponding instant message receivers. Specifically, as shown in FIG. 7:

701: A first terminal 71 sends an instant message to a server 72.

702: The server 72 determines a target display style of the first terminal 71.

Specifically, the server allocates a target display style to the first terminal, saves target display style information, and then encapsulates, according to the target display style information, the instant message that is sent by the first terminal and received by the first terminal.

703: The server 72 sends the encapsulated instant message to a second terminal 73.

In this embodiment of the present invention, the server implements display style adjustment by using 701 to 703. In this embodiment, each terminal participating in instant messaging keeps unchanged and still uses an initial display style to encapsulate instant information, and a server participating in instant messaging independently completes allocation of display styles to terminals and re-encapsulation of the instant information, thereby ensuring that participating users in a multi-party chat scenario can be recognized. In addition, in this embodiment, quantity of signaling exchanges times between a terminal whose display style needs to be adjusted and the server can be further reduced, further saving channel resources.

Optionally, in the foregoing implementation manner, the obtaining module 10 may be specifically configured to receive instant messages from at least two terminals in an instant messaging group, and separately obtain, through parsing, user information of the at least two terminals; the determining module 20 is configured to determine, according to the user information of the at least two terminals and instant messaging subgroup information, that users of the at least two terminals belong to a same subgroup of the instant messaging group, and then determine to provide a recommended display style for at least one terminal of the at least two terminals, and send an indication to the selection module 30; and the selection module 30 may be specifically configured to select the target display style according to the indication sent by the determining module 20 and based on a preset rule, so that the instant message is displayed in the target display style on the at least one terminal.

FIG. 8 is a schematic structural diagram of Embodiment 1 of a terminal according to the present invention. This embodiment of the present invention provides a terminal, where the terminal is applicable to instant messaging. The terminal may be any terminal device such as a mobile device, a smartphone, an IMD, a PC, a notebook computer, a PDA, or a tablet computer.

As shown in FIG. 8, the terminal 80 includes a display style adjustment system 81, in the foregoing embodiments, that can be integrated into the terminal and a display module 82. The display module 82 may be configured to display, on a user interface of the terminal 80 according to a target display style selected by a selection module in the display style adjustment system 81, instant information sent by the terminal 80.

In this embodiment, an implementation principle and a technical effect of each module in the display style adjustment system 81 are the same as those in the foregoing embodiments, and are not elaborated.

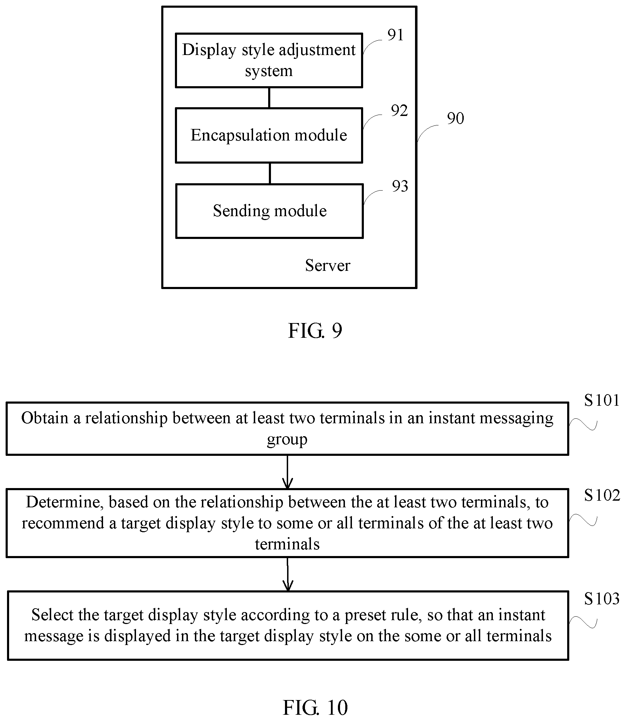

FIG. 9 is a schematic structural diagram of Embodiment 1 of a server according to the present invention. This embodiment of the present invention provides a server. The server is applicable to instant messaging. As shown in FIG. 9, a server 90 may include a display style adjustment system 91, an encapsulation module 92, and a sending module 93. The encapsulation module 92 may be configured to encapsulate, according to a target display style selected by a selection module in the display style adjustment system 91, an instant message to be sent to at least one terminal. The sending module 93 may be configured to send the encapsulated instant message.

In this embodiment, an implementation principle and a technical effect of each module in the display style adjustment system 91 are the same as those in the foregoing embodiments, and are not elaborated.

FIG. 10 is a flowchart of Embodiment 1 of a display style adjustment method according to the present invention. This embodiment of the present invention provides a display style adjustment method. The method is applicable to instant messaging, and may be executed by a display style adjustment system. The system may be integrated into a server and/or a terminal, or may exist as an independent plug-in. As shown in FIG. 10, the method includes:

S101: Obtain a relationship between at least two terminals in an instant messaging group.

S102: Determine, based on the relationship between the at least two terminals, to recommend a target display style to some or all terminals of the at least two terminals.

S103: Select the target display style according to a preset rule, so that an instant message is displayed in the target display style on the some or all terminals.

The method in this embodiment may be executed by the system shown in FIG. 2. An implementation principle and a technical effect of the method are similar to those in the foregoing embodiments, and are not elaborated.

In the foregoing embodiment, the relationship between the at least two terminals may include a relationship between instant message display styles of the at least two terminals or a relationship between users of the at least two terminals. The relationship between the instant message display styles of the at least two terminals may be specifically that a similarity between the display styles reaches a preset criterion. The relationship between the users of the at least two terminals may be specifically that the users of the at least two terminals belong to a same subgroup of the instant messaging group.

Optionally, in an implementation manner, the method is executed by a terminal that performs instant messaging. S101 may include: the terminal receives an instant message from at least one another terminal in an instant messaging group, and obtains, through parsing, an instant message display style of the at least one another terminal. S102 may include: the terminal compares the instant messaging display style of the at least one another terminal with a default display style pre-stored locally, and if a difference between the two reaches to a preset criterion, determines to provide a recommended target display style. S103 may include: the terminal selects the target display style according to a preset rule, so that the instant message is displayed in the target display style on a display interface of the terminal.

In another implementation manner, the method is executed by any terminal that performs instant messaging and a server that performs instant messaging. S101 may include: the server receives instant messages from at least two terminals in an instant messaging group, and separately obtains, through parsing, instant message display styles of the at least two terminals. S102 may include: the server compares any two display styles of the foregoing display styles obtained through parsing, and if a difference between the any two display styles reaches to a preset criterion, determines to provide a recommended target display style for at least one of the at least two terminals, and sends an indication to the terminal. S103 may include: the terminal that receives the indication selects the target display style based on a preset rule, so that the instant message is displayed in the target display style on a display interface of the terminal.

In this implementation manner, optionally, S101 may include: the server receives instant messages from at least two terminals in an instant messaging group, and separately obtains, through parsing, user information of the at least two terminals. S102 may include: the server determines, according to the user information of the at least two terminals and instant messaging subgroup information, that users of the at least two terminals belong to a same subgroup of the instant messaging group, and then determines to provide a recommended target display style for at least one terminal of the at least two terminals, and sends an indication to the terminal. S103 may include: the terminal that receives the indication selects the target display style based on a preset rule, so that the instant message is displayed in the recommended display style on a display interface of the terminal.

In still another implementation manner, the method is executed by a server that performs instant messaging. S101 may include: the server receives instant messages from at least two terminals in an instant messaging group, and separately obtains, through parsing, instant message display styles of the at least two terminals. S102 may include: the server compares any two display styles of the foregoing display styles obtained through parsing, and if a difference between the any two display styles reaches to a preset criterion, determines to provide a recommended target display style for at least one of terminals corresponding to the any two display styles, and sends an indication to the terminal. S103 may include: the server selects the target display style for the terminal based on a preset rule, so that the instant message is displayed in the target display style on the terminal.

In this implementation manner, optionally, S101 may include: the server receives instant messages from at least two terminals in an instant messaging group, and separately obtains, through parsing, user information of the at least two terminals. S102 may include: the server determines, according to the user information of the at least two terminals and instant messaging subgroup information, that users of the at least two terminals belong to a same subgroup of the instant messaging group, and then determines to provide a recommended target display style for at least one terminal of the at least two terminals, and sends an indication to the terminal. S103 may include: the server selects the target display style based on a preset rule, so that the instant message is displayed in the target display style on the at least one terminal.

In yet another implementation manner, the method is executed by a terminal that performs instant messaging. S101 may include: the terminal receives an instant message from at least one another terminal in an instant messaging group, and obtains, through parsing, user information of the at least one another terminal. S102 may include: the terminal determines, according to user information of the terminal itself, the user information of the at least one another terminal, and instant messaging group information, that users of the terminal itself and the at least one another terminal belong to a same subgroup of the instant messaging group, and then determines to provide the recommended target display style for at least one terminal of the terminal itself and the at least one another terminal and sends an indication to the terminal. S103 may include: the terminal that receives the indication selects the target display style according to a preset rule, so that the instant message is displayed in the target display style on a display interface of the terminal.

In this embodiment of the present invention, according to the display style adjustment method, a display style used by a terminal that has a display conflict during an instant messaging process is adjusted, which can improve a recognition of different participating users in a multiple-party instant messaging process, and accurately and quickly distinguish multiple users participating in messaging.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A display style adjustment system, wherein the system is applicable to instant messaging and comprises:
an obtaining module, configured to obtain a relationship between at least two terminals in an instant messaging group;
a determining module, configured to determine, based on the relationship between the at least two terminals obtained by the obtaining module, to recommend a target display style to some or all terminals of the at least two terminals; and
a selection module, configured to select the target display style according to an indication of the determining module and a preset rule of the system, so that an instant message is displayed in the target display style on the some or all terminals.

2. The system according to claim 1, wherein the relationship between the at least two terminals comprises:
a relationship between instant message display styles of the at least two terminals, or a relationship between users of the at least two terminals.

3. The system according to claim 2, wherein the relationship between the instant message display styles of the at least two terminals is that a similarity between the display styles reaches a preset criterion.

4. The system according to claim 2, wherein the relationship between the users of the at least two terminals is that the users of the at least two terminals belong to a same subgroup of the instant messaging group.

5. The system according to claim 3, wherein the system is integrated into any terminal that performs instant messaging, wherein
the obtaining module is specifically configured to receive an instant message from at least one another terminal in the instant messaging group, and obtain, through parsing, an instant message display style of the at least one another terminal;
the determining module is specifically configured to compare the instant message display style of the at least one another terminal with a default display style pre-stored locally in the terminal, and if a difference between the two reaches to the preset criterion, determine to provide the recommended target display style for the terminal and send the indication to the selection module; and
the selection module is configured to select the target display style according to the indication sent by the determining module and the preset rule, so that the instant message is displayed in the target display style on the terminal.

6. The system according to claim 3, wherein the obtaining module and the determining module are integrated into a server that performs instant messaging, and the selection module is integrated into any terminal that performs instant messaging, wherein
the obtaining module is specifically configured to receive instant messages from the at least two terminals in the instant messaging group, and separately obtain, through parsing, the instant message display styles of the at least two terminals;
the determining module is specifically configured to compare any two display styles obtained by the obtaining module through parsing, and if a difference between the any two display styles reaches to the preset criterion, determine to provide the recommended target display style for at least one terminal of the at least two terminals, and send the indication to the selection module; and
the selection module is specifically configured to select the target display style according to the indication sent by the determining module and based on the preset rule, so that the instant message is displayed in the target display style on the terminal.

7. The system according to claim 3, wherein the system is integrated into a server that performs instant messaging, wherein
the obtaining module is specifically configured to receive instant messages from the at least two terminals in the instant messaging group, and separately obtain, through parsing, the instant message display styles of the at least two terminals;
the determining module is specifically configured to compare any two display styles obtained by the obtaining module through parsing, and if a difference between the any two display styles reaches to the preset criterion, determine to provide the recommended target display style for at least one of terminals corresponding to the any two display styles, and send the indication to the selection module; and
the selection module is specifically configured to select the target display style for the at least one terminal according to the indication sent by the determining module and based on the preset rule, so that the instant message is displayed in the target display style on the at least one terminal.

8. The system according to claim 4, wherein the system is integrated into any terminal that performs instant messaging, wherein
the obtaining module is specifically configured to receive an instant message from at least one another terminal in the instant messaging group, and obtain, through parsing, user information of the at least one another terminal;
the determining module is specifically configured to determine, according to the user information of the at least one another terminal obtained by the obtaining module, user information of the terminal itself, and instant messaging subgroup information, that users of the terminal and the at least one another terminal belong to a same subgroup of the instant messaging group, and then determine to provide the recommended target display style for the terminal, and send the indication to the selection module; and
the selection module is configured to select the target display style according to the indication sent by the determining module and the preset rule, so that the instant message is displayed in the target display style on the terminal.

9. The system according to claim 4, wherein the obtaining module and the determining module are integrated into a server that performs instant messaging, and the selection module is integrated into any terminal that performs instant messaging, wherein
the obtaining module is specifically configured to receive instant messages from the at least two terminals in the instant messaging group, and separately obtain, through parsing, user information of the at least two terminals;
the determining module is specifically configured to determine, according to the user information of the at least two terminals obtained by the obtaining module and instant messaging subgroup information, that the users of the at least two terminals belong to a same subgroup of the instant messaging group, and then determine to provide the recommended target display style for at least one terminal of the at least two terminals, and send the indication to the selection module; and
the selection module is specifically configured to select the target display style according to the indication sent by the determining module and based on the preset rule, so that the instant message is displayed in the recommended display style on the terminal.

10. The system according to claim 4, wherein the system is integrated into a server that performs instant messaging, wherein
the obtaining module is specifically configured to receive instant messages from the at least two terminals in the instant messaging group, and separately obtain, through parsing, user information of the at least two terminals;
the determining module is specifically configured to determine, according to the user information of the at least two terminals and instant messaging subgroup information, that the users of the at least two terminals belong to a same subgroup of the instant messaging group, and then determine to provide the recommended target display style for at least one terminal of the at least two terminals, and send the indication to the selection module; and
the selection module is specifically configured to select the target display style according to the indication sent by the determining module and based on the preset rule, so that the instant message is displayed in the target display style on the at least one terminal.

11. A terminal, wherein the terminal is applicable to instant messaging and comprises:
the display style adjustment system according to any one of claims 1 to 3, 5, 6, 8 and 9;
and
a display module, configured to display, on a user interface of the terminal according to the target display style selected by the selection module in the display style adjustment system, instant information sent by the terminal.

12. A server, wherein the server is applicable to instant messaging and comprises:
the display style adjustment system according to claim 1, 2, 4, 7, or 10;
an encapsulation module, configured to encapsulate, according to the target display style selected by the selection module, an instant message to be sent to the at least one terminal; and
a sending module, configured to send the encapsulated instant message.

13. A display style adjustment method, wherein the method is applicable to instant messaging and comprises:
obtaining a relationship between at least two terminals in an instant messaging group;
determining, based on the relationship between the at least two terminals, to recommend a target display style to some or all terminals of the at least two terminals; and
selecting the target display style according to a preset rule, so that an instant message is displayed in the target display style on the some or all terminals.

14. The method according to claim 13, wherein the relationship between the at least two terminals comprises:
a relationship between instant message display styles of the at least two terminals, or a relationship between users of the at least two terminals.

15. The method according to claim 14, wherein the relationship between the instant message display styles of the at least two terminals is that a similarity between the display styles reaches a preset criterion.

16. The method according to claim 14, wherein the relationship between the users of the at least two terminals is that the users of the at least two terminals belong to a same subgroup of the instant messaging group.

17. The method according to claim 15, wherein the method is executed by a terminal that performs instant messaging, wherein
the obtaining a relationship between at least two terminals in an instant messaging group comprises:
receiving, by the terminal, an instant message from at least one another terminal in the instant messaging group, and obtaining, through parsing, an instant message display style of the at least one another terminal;
the determining, based on the relationship between the at least two terminals, to recommend a target display style to some or all terminals of the at least two terminals comprises:
comparing, by the terminal, the instant message display style of the at least one another terminal with a default display style pre-stored locally in the terminal, and if a difference between the two reaches to the preset criterion, determining to provide the recommended target display style; and
the selecting the target display style according to a preset rule, so that an instant message is displayed in the target display style on the some or all terminals comprises:
selecting, by the terminal, the target display style according to the preset rule, so that the instant message is displayed in the target display style on a display interface of the terminal.

18. The method according to claim 15, wherein the method is executed by any terminal that performs instant messaging and a server that performs instant messaging, wherein
the obtaining a relationship between at least two terminals in an instant messaging group comprises:
receiving, by the server, instant messages from the at least two terminals in the instant messaging group, and separately obtaining, through parsing, the instant message display styles of the at least two terminals;
the determining, based on the relationship between the at least two terminals, to recommend a target display style to some or all terminals of the at least two terminals comprises:
comparing, by the server, any two display styles obtained through parsing, and if a difference between the any two display styles reaches to the preset criterion, determining to provide the recommended target display style for at least one terminal of the at least two terminals, and sending an indication to the terminal; and
the selecting the target display style according to a preset rule, so that an instant message is displayed in the target display style on the some or all terminals comprises:
selecting, by the terminal that receives the indication, the target display style based on the preset rule, so that the instant message is displayed in the target display style on a display interface of the terminal.

19. The method according to claim 15, wherein the method is executed by a server that performs instant messaging, wherein
the obtaining a relationship between at least two terminals in an instant messaging group comprises:
receiving, by the server, instant messages from the at least two terminals in the instant messaging group, and separately obtaining, through parsing, the instant message display styles of the at least two terminals;
the determining, based on the relationship between the at least two terminals, to recommend a target display style to some or all terminals of the at least two terminals comprises:
comparing, by the server, any two display styles obtained through parsing, and if a difference between the any two display styles reaches to the preset criterion, determining to provide the recommended target display style for at least one of terminals corresponding to the any two display styles, and sending an indication to the terminal; and
the selecting the target display style according to a preset rule, so that an instant message is displayed in the target display style on the some or all terminals comprises:
selecting, by the server, the target display style for the terminal based on the preset rule, so that the instant message is displayed in the target display style on the terminal.

20. The method according to claim 16, wherein the method is executed by a terminal that performs instant messaging, wherein
the obtaining a relationship between at least two terminals in an instant messaging group comprises:
receiving, by the terminal, an instant message from at least one another terminal in the instant messaging group, and obtaining, through parsing, user information of the at least one another terminal;
the determining, based on the relationship between the at least two terminals, to recommend a target display style to some or all terminals of the at least two terminals comprises:
determining, by the terminal according to user information of the terminal itself, the user information of the at least one another terminal, and instant messaging subgroup information, that users of the terminal itself and the at least one another terminal belong to a same subgroup of the instant messaging group, and then determining to provide the recommended target display style for at least one terminal of the terminal itself and the at least one another terminal, and sending an indication to the terminal; and
the selecting the target display style according to a preset rule, so that an instant message is displayed in the target display style on the some or all terminals comprises:
selecting, by the terminal that receives the indication, the target display style according to the preset rule, so that the instant message is displayed in the target display style on a display interface of the terminal.

21. The method according to claim 16, wherein the method is executed by any terminal that performs instant messaging and a server that performs instant messaging, wherein
the obtaining a relationship between at least two terminals in an instant messaging group comprises:
receiving, by the server, instant messages from the at least two terminals in the instant messaging group, and separately obtaining, through parsing, user information of the at least two terminals;
the determining, based on the relationship between the at least two terminals, to recommend a target display style to some or all terminals of the at least two terminals comprises:
determining, by the server, according to the user information of the at least two terminals and instant messaging subgroup information, that the users of the at least two terminals belong to a same subgroup of the instant messaging group, and then determining to provide the recommended target display style for at least one terminal of the at least two terminals, and sending an indication to the terminal; and
the selecting the target display style according to a preset rule, so that an instant message is displayed in the target display style on the some or all terminals comprises:
selecting, by the terminal that receives the indication, the target display style based on the preset rule, so that the instant message is displayed in the recommended display style on a display interface of the terminal.

22. The method according to claim 16, wherein the method is executed by a server that performs instant messaging, wherein
the obtaining a relationship between at least two terminals in an instant messaging group comprises:
receiving, by the server, instant messages from the at least two terminals in the instant messaging group, and separately obtaining, through parsing, user information of the at least two terminals;
the determining, based on the relationship between the at least two terminals, to recommend a target display style to some or all terminals of the at least two terminals comprises:
determining, by the server, according to the user information of the at least two terminals and instant messaging subgroup information, that the users of the at least two terminals belong to a same subgroup of the instant messaging group, and then determining to provide the recommended target display style for at least one terminal of the at least two terminals, and sending an indication to the terminal; and
the selecting the target display style according to a preset rule, so that an instant message is displayed in the target display style on the some or all terminals comprises:
selecting, by the server, the target display style based on the preset rule, so that the instant message is displayed in the target display style on the at least one terminal.
